(19) Europäisches Patentamt
European Patent Office
Office européen des brevets

(11) Numéro de publication: **0 490 726 B1**

# (12) FASCICULE DE BREVET EUROPEEN

(45) Date de publication de fascicule du brevet: **19.04.95**

(51) Int. Cl.[6]: **C09D 9/00**

(21) Numéro de dépôt: **91403228.9**

(22) Date de dépôt: **28.11.91**

(54) **Utilisation d'une composition pour le dépage de peintures.**

(30) Priorité: **07.12.90 FR 9015344**

(43) Date de publication de la demande:
**17.06.92 Bulletin 92/25**

(45) Mention de la délivrance du brevet:
**19.04.95 Bulletin 95/16**

(84) Etats contractants désignés:
**AT BE CH DE DK ES FR GB GR IT LI LU NL SE**

(56) Documents cités:
**WO-A-86/03766**
**WO-A-88/06640**
**US-A- 2 694 658**
**US-A- 3 673 099**
**US-A- 4 744 834**

(73) Titulaire: **ELF ATOCHEM S.A.**
**4 & 8, Cours Michelet**
**La Défense 10**
**F-92800 Puteaux (FR)**

(72) Inventeur: **Lallier, Jean-Pierre**
**38, Rue Broca**
**F-75005 Paris (FR)**
Inventeur: **Marie, Patrick**
**3, Rue gay Lussac**
**F-78800 Houilles (FR)**

(74) Mandataire: **Hirsch, Marc-Roger et al**
**Cabinet Hirsch**
**34 rue de Bassano**
**F-75008 Paris (FR)**

**EP 0 490 726 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne l'utilisation pour le décapage de peintures d'une composition et, plus particulièrement, d'une composition ne contenant ni solvants chlorés, ni aromatiques, ni alcalis.

US-A-3 600 322 décrit l'utilisation de mélanges de chlorure de méthylène et de méthanol pour enlever des peintures, des vernis ou des laques. D'autres brevets décrivent, pour la même application, l'utilisation d'un mélange contenant des lactames ou des lactones, dont notamment la N-méthyl-2-pyrrolidone ou la $\gamma$-butyrolactone, en association avec d'autres composés actifs. Ces composés actifs peuvent être des alkylèneglycoléthers. Les PCT WO 86/03766, WO 88/06640, US-A-5 011 121, US-A-5 015 410 sont illustratifs de l'utilisation de tels mélanges.

Il est connu d'après US-A-2 694 658 d'utiliser du DMSO en tant que solvant pour décaper les peintures.

Néanmoins, tous ces solvants présentent l'inconvénient d'être chers et d'être présents dans les compositions en des quantités importantes. Ainsi, il existe un besoin dans l'industrie des décapants d'utiliser un mélange aussi efficace que ceux de l'art antérieur mais dont le coût est moindre.

La demanderesse a ainsi trouvé de façon surprenante que ce but ainsi que d'autres sont atteints par l'utilisation d'une composition selon la présente invention.

Ainsi, la présente invention fournit utilisation pour le décapage de peintures d'une composition comprenant, en volume:

a) 1 à 20% d'un solvant polaire aprotique choisi dans le groupe consistant en: diméthylsulfoxyde (DMSO), diméthylformamide (DMF), N-méthylpyrrolidone (NMP), N-méthylmorpholine (NMm), $\gamma$-butyrolactone (BLo), acétonitrile (AcN) et leurs mélanges; et

(b) 99 à 80% d'un éther choisi dans le groupe consistant en: méthyl-tert-butyléther (MTBE), diéthyléther ($Et_2O$), tert-amylméthyléther (TAME), tétrahydrofuranne (THF), dioxane (Dx), et leurs mélanges.

Selon un mode de réalisation préféré de la présente invention, le solvant polaire aprotique et l'éther sont présents en des quantités respectives de 5 à 15% et de 95 à 85% en volume, dans la composition selon la présente invention. De préférence, le rapport volumique est d'environ 10/90.

De préférence, l'éther est choisi dans le groupe consistant en méthyl-tert-butyléther, diéthyléther, tert-amylméthyléther et leurs mélanges. Plus avantageusement, l'éther est le méthyl-tert-butyléther.

Selon un autre mode de réalisation préféré de la présente invention, l'éther est choisi dans le groupe consistant en tétrahydrofuranne, dioxane et leurs mélanges.

Selon un mode de réalisation particulièrement préféré de la présente invention, le solvant polaire aprotique est le diméthylsulfoxyde.

De préférence, la composition est constituée de DMSO et MTBE, selon un rapport volumique de 5/95 à 15/85, avantageusement d'environ 10/90.

La composition selon la présente invention peut aussi contenir des additifs classiques. Des exemples de ces additifs classiques sont: un cosolvant, un activateur, un ignifugeant, un épaississant, un stabilisant, un tensio-actif, un retardateur d'évaporation et, en général, tout additif pourvu que celui-ci ne soit pas un solvant chloré ou aromatique. En particulier, l'ajout de corps gras, d'origine d'animale ou végétale, par exemple certaines coupes estérifiés, permet de réduire l'inflammabilité du mélange. Des dérivés cellulosiques, tels que la méthylcellulose, ou des aérosils (tels que la silice pyrogénée), peuvent être ajoutés pour épaissir le mélange de solvants.

L'ajout d'un tensio-actif permet l'augmentation des vitesses de décapage. De même, la vitesse de décapage est augmentée avec l'ajout d'une partie de méthanol.

Selon un mode de réalisation de la présente invention, la composition comprend de plus un agent tensio-actif fluoré. Cet agent tensio-actif fluoré est de préférence le composé répondant à la formule:

$$C_6F_{13}(OCH_2CH_2)_nH, \bar{n} = 10$$

disponible dans le commerce sous le nom FORAFAC® 1110.

La préparation des compositions selon l'invention peut se faire par simple mélange des différents composants, à l'aide d'un agitateur ou tout autre appareil approprié.

Les compositions selon la présente invention sont utiles pour décaper les peintures. La présente invention a donc pour objet ces compositions et leur application au décapage de diverses peintures sur différents substrats.

Ainsi, la présente invention fournit une composition décapante pour le décapage de peintures glycérophtaliques sur un substrat constitué de bois, dans laquelle le solvant est le diméthylsulfoxyde et l'éther est choisi dans le groupe consistant en diéthyléther, méthyl-tert-butyléther, tert-amylméthyléther et leurs mélanges.

De même, l'invention fournit une composition décapante pour le décapage de peintures alkyde-uréthane sur un substrat constitué de bois, dans laquelle le solvant est le diméthyl-sulfoxyde et l'éther est choisi dans le groupe consistant en diéthyléther, méthyl-tert-butyléther, tert-amylméthyléther et leurs mélanges.

De même, l'invention fournit une composition décapante pour le décapage de peintures alkyde-uréthane sur un substrat constitué de bois, dans laquelle l'éther est le tétrahydrofuranne et le solvant est choisi dans le groupe consistant en diméthylsulfoxyde, diméthylformamide, N-méthyl-pyrrolidone, N-méthyl-morpholine, $\gamma$-butyrolactone, acétonitrile, et leurs mélanges.

De même, l'invention fournit une composition décapante pour le décapage de peintures acrylique-polyuréthane sur un substrat constitué de métal, dans laquelle le solvant est le diméthylsulfoxyde et l'éther est choisi dans le groupe consistant en tétrahydrofuranne, dioxane, et leurs mélanges.

Egalement, l'invention fournit une composition décapante pour le décapage de peintures acrylique-polyuréthane sur un substrat constitué de métal, dans laquelle l'éther est le tétrahydrofuranne et le solvant est choisi dans le groupe consistant en diméthylformamide, N-méthyl-pyrrolidone, N-méthyl-morpholine, $\gamma$-butyrolactone, acétonitrile, et leurs mélanges.

De même, l'invention fournit une composition décapante pour le décapage de peintures époxy sur un substrat constitué de métal, dans laquelle le solvant est le diméthylsulfoxyde et l'éther est choisi dans le groupe consistant en diéthyléther, méthyl-tert-butyléther, tert-amylméthyléther et leurs mélanges.

L'invention a aussi pour objet un procédé de décapage de peintures sur substrats, caractérisé en ce que lesdites peintures sont mises en contact avec une composition selon la présente invention. De préférence, la peinture est une peinture utilisée dans le secteur du bâtiment et le substrat est du bois.

Le procédé de décapage est mis en oeuvre par mise en contact de l'objet ou de la surface à décaper avec la composition selon la présente invention. Cette mise en contact est continuée jusqu'à ce que la peinture gonfle, forme des cloques et se décolle. La mise en contact de l'objet ou de la surface à décaper avec la composition selon la présente invention peut être faite par divers moyens. Parmi ces moyens, on peut citer l'immersion, l'aspersion, l'enduction à l'aide d'un pinceau. La mise en contact est effectuée à une température comprise entre 5 et 25°C, c'est-à-dire à la température ambiante. Le temps de contact est compris entre 15 et 45 minutes.

La présente invention est maintenant décrite plus en détail par les exemples suivants, illustratifs de celle-ci et ne devant en aucun cas être considérés comme limitatifs de la présente invention, dont de nombreuses variantes sont aisément accessibles à l'homme de l'art.

## EXEMPLES

### Mode opératoire

Les substrats enduits de peintures sont immergés dans 30 ml de composition décapante selon la présente invention, à température ambiante (20°C) pendant au moins 30 minutes. Les performances ont été estimées par visualisation des effets obtenus.

### A. Peinture glycérophtalique + primaire/bois

Il s'agit d'une peinture veillie et donc parfaitement réticulée. Pour une composition solvante et non performante (o), la peinture glycérophtalique (couche brillante) reste intacte ou tout au plus, il apparaît à la binoculaire (grossissement G = 7x) quelques petites cloques disséminées sur la surface. Une composition solvante et performante (*) conduit à une surface remplie de grosses écailles. Le substrat est alors rincé sous un jet d'eau (action mécanique) pour éliminer les écailles non adhérentes. La surface est ensuite visualisée à la binoculaire (G = 7x). Avec les combinaisons solvantes et très performantes (**), on constate alors que la couche de primaire est partiellement entamée sur au moins la totalité de la surface.

### B. Peinture alkyde-uréthane/bois

Comme précédemment, il s'agit toujours d'une peinture vieillie et donc parfaitement réticulée. Pour une composition solvante et non performante, on observe à la surface aucune action, la peinture restant brillante. Pour une composition solvante et performante (*), la surface est remplie d'écailles, mais celles-ci restent accrochées même après un lavage à l'eau intensif. Par contre, après immersion dans une composition solvante et très performante (**), on constate qu'un simple jet d'eau permet d'éliminer la quasi-totalité des écailles formées.

C. Peinture acrylique-polyuréthane/aluminium

Avec une composition solvante et non performante, on obtient généralement d'un début d'attaque sur les bords de la plaque. Après une heure, on ne constate pas de progression du décapage. Une composition solvante et très performante (**) conduit à un décollement du film en un seul bloc et en moins de 15 minutes. Pour une composition solvante et performance (*), il faut rajouter quelques minutes d'immersion pour obtenir le même effet. Dans ce cas, le film est toujours décollé en un temps inférieur à 30 minutes. Pour les compositions performantes et très performantes, on observe toujours un allongement du film de quelques millimètres (allongement relatif < 30%).

D. Peinture époxy/aluminium

Après 1 heure d'immersion, on observe pour les compositions performantes (*) un ramollissement de cette peinture très résistante. Un simple grattage permet alors de l'éliminer assez facilement. Une composition solvante décapante très performante (**) à base d'acide formique réussit, par son mécanisme d'action chimique, à éliminer totalement la couche d'époxy sans opération de grattage.

Six solvants polaires aprotiques et cinq éthers ont été testés seuls et en combinaison selon un rapport en volume d'environ 10/90.

Ci-après sont donnés, dans les quatre cas de peintures et de substrats précités, l'action des mélanges des compositions selon la présente invention ainsi que l'action d'une composition selon l'art antérieur, ladite composition selon l'art antérieur étant constituée d'un mélange chlorure de méthylène/$CH_3OH$ selon un rapport volumique d'environ 90/10.

Les éthers testés sont:

| | |
|---|---|
| THF | tétrahydrofuranne |
| Dx | dioxane |
| $Et_2O$ | diéthyléther |
| MTBE | méthyl-tert-butyléther |
| TAME | tert-amylméthyléther |

Solvants polaires aprotiques

| | |
|---|---|
| DMSO | diméthylsulfoxyde |
| DMF | diméthylformamide |
| NMP | N-méthylpyrrolidone |
| NMm | N-méthylmorpholine |
| BLo | $\gamma$-butyrolactone, |
| AcN | acétonitrile |

Exemple 1 - peinture glycérophtalique + primaire/bois

| 90% / 10% | - | $Et_2O$ | MTBE | TAME | $CH_2Cl_2$ |
|---|---|---|---|---|---|
| - | - | o | o | o | - |
| DMSO | ** | ** | ** | ** | - |
| MeOH | - | - | - | - | * |

Exemple 2 - peinture alkyde - uréthane/bois

| | - | $Et_2O$ | MTBE | TAME | $CH_2Cl_2$ |
|---|---|---|---|---|---|
| - | - | * | o | o | - |
| DMSO | * | ** | ** | ** | - |
| MeOH | - | - | - | - | ** |

Exemple 3 - peinture alkyde - uréthane/bois

| | - | THF | $CH_2Cl_2$ |
|---|---|---|---|
| - | - | o | - |
| DMSO | * | ** | - |
| DMF | ** | ** | - |
| NMP | ** | * | - |
| NMm | * | * | - |
| BLo | o | * | - |
| AcN | o | * | - |
| MeOH | - | - | ** |

Exemple 4 - peinture acrylique - polyuréthane/aluminium

| | - | THF | Dx | $CH_2Cl_2$ |
|---|---|---|---|---|
| - | - | * | * | - |
| DMSO | * | ** | ** | - |
| MeOH | - | - | - | * |

Exemple 5 - peinture acrylique - polyuréthane/aluminium

| | - | THF | $CH_2Cl_2$ |
|---|---|---|---|
| - | - | * | - |
| DMF | ** | ** | - |
| NMP | * | ** | - |
| NMm | * | ** | - |
| BLo | o | ** | - |
| AcN | o | ** | - |
| MeOH | - | ** | * |

Exemple 6 - peinture époxy/aluminium

| | - | $Et_2O$ | MTBE | TAME | $CH_2Cl_2$ |
|---|---|---|---|---|---|
| - | - | o | o | o | - |
| DMSO | * | * | * | * | - |
| MeOH | - | - | - | - | * |

Exemple 7

Cet exemple illustre une composition contenant un tensio-actif fluoré. La composition contient en volume, 90% de MTBE, 5% de DMSO et 5% de FORAFAC® 1110. Cette composition, appliquée sur une peinture glycérophtalique + primaire sur substrat en bois est très performante (**).

**Revendications**

**1.** Utilisation, pour le décapage de peintures, d'une composition décapante comprenant, en volume:
(a) 1 à 20% d'un solvant polaire aprotique choisi dans le groupe consistant en: diméthylsulfoxyde, diméthylformamide, N-méthyl-pyrrolidone, N-méthyl-morpholine, γ-butyrolactone, acétonitrile, et leurs mélanges; et
(b) 99 à 80% d'un éther choisi dans le groupe consistant en: diéthyléther, mèthyl-tertbutyl-éther, tertamyl-méthyl-éther, tétrahydrofuranne, dioxane, et leurs mélanges.

**2.** Utilisation selon la revendication 1, caractérisée en ce que dans la composition, le solvant polaire et l'éther sont présents en des quantités respectives de 5 à 15% et de 95 à 85% en volume.

**3.** Utilisation selon la revendication 1 ou 2, caractérisée en ce que dans la composition, le solvant polaire et l'éther sont présents selon un rapport volumique d'environ 10/90.

**4.** Utilisation selon l'une quelconque des revendications 1 à 3, caractérisée en ce que l'éther est choisi dans le groupe consistant en méthyl-tertbutyl-éther, diéthyléther, tertamyl-méthyl-éther, et leurs mélanges.

**5.** Utilisation selon l'une quelconque des revendications 1 à 4, caractérisée en ce que l'éther est le méthyl-tertbutyl-éther.

**6.** Utilisation selon l'une quelconque des revendications 1 à 3, caractérisée en ce que l'éther est choisi dans le groupe consistant en tétrahydrofuranne, dioxane, et leurs mélanges.

**7.** Utilisation selon l'une quelconque des revendications 1 à 6, caractérisée en ce que le solvant est le diméthylsulfoxyde.

**8.** Utilisation selon l'une quelconque des revendications 1 à 3, caractérisée en ce que le solvant est le diméthylsulfoxyde et l'éther est le méthyl-tertbutyl-éther.

**9.** Utilisation selon l'une quelconque des revendications 1 à 8, caractérisée en ce que la composition comprend de plus un agent tensio-actif fluoré.

**10.** Utilisation selon l'une quelconque des revendications 1 à 3, pour le décapage de peintures glycérophtaliques sur un substrat constitué de bois, le solvant polaire aprotique étant du diméthylsulfoxyde et l'éther étant choisi dans le groupe consistant en diéthyléther, méthyl-tertbutyl-éther, tertamyl-méthyl-éther et leurs mélanges.

**11.** Utilisation selon l'une quelconque des revendications 1 à 3, pour le décapage de peintures alkyde-uréthane sur un substrat constitué de bois, le solvant étant du diméthylsulfoxyde et l'éther étant choisi dans le groupe consistant en diéthyléther, méthyl-tertbutyl-éther, tertamyl-méthyl-éther et leurs mélanges.

**12.** Utilisation selon l'une quelconque des revendications 1 à 3, pour le décapage de peintures alkyde-uréthane sur un substrat constitué de bois, l'éther étant tétrahydrofuranne et le solvant étant choisi dans le groupe consistant en diméthylsulfoxyde, diméthylformamide, N-méthyl-pyrrolidone, N-méthyl-morpholine, $\gamma$-butyrolactone, acétonitrile et leurs mélanges.

**13.** Utilisation selon l'une quelconque des revendications 1 à 3, pour le décapage de peintures acrylique-polyuréthane sur un substrat constitué de métal, le solvant étant le diméthylsulfoxyde et l'éther étant choisi dans le groupe consistant en tétrahydrofuranne, dioxane et leurs mélanges.

**14.** Utilisation selon l'une quelconque des revendications 1 à 3, pour le décapage de peintures acrylique-polyuréthane sur un substrat constitué de métal, l'éther étant le tétrahydrofuranne, le solvant étant choisi dans le groupe consistant en diméthylformamide, N-méthyl-pyrrolidone, N-méthyl-morpholine, $\gamma$-butyrolactone, acétonitrile et leurs mélanges.

**15.** Utilisation selon l'une quelconque des revendications 1 à 3, pour le décapage de peintures époxy sur un substrat constitué de métal, le solvant étant le diméthylsulfoxyde et l'éther étant choisi dans le groupe consistant en diéthyléther, méthyl-tertbutyl-éther, tertamyl-méthyl-éther et leurs mélanges.

**16.** Utilisation selon l'une quelconque des revendications 1 à 15, dans le secteur du bâtiment.

## Claims

**1.** Use, for the removal of paints, of a stripper composition comprising, by volume:

a) 1 to 20% of an aprotic polar solvent selected from the group comprising: dimethylsulfoxide, dimethylformamide, N-methyl-pyrrolidone, N-methyl-morpholine, $\gamma$-butyrolactone, acetonitrile and mixtures thereof; and

b) 99 to 80% of an ether selected from the group comprising: methyl-tert-butylether, diethylether, tert-amyl-methylether, tetrahydrofuran, dioxan and mixtures thereof.

**2.** The use according to claim 1, characterized in that the aprotic polar solvent and the ether are present in respective amounts of 5 to 15% and 95 to 85% by volume.

**3.** The use according to claim 1 or 2, characterized in that the aprotic polar solvent and the ether are present in a volume ratio of about 10/90.

**4.** The use according to any one of claims 1 to 3, characterized in that the ether is selected from the group comprising methyl-tert-butylether, diethylether, tert-amyl-methylether and mixtures thereof.

**5.** The use according to any one of claims 1 to 4, characterized in that the ether is methyl-tert-butylether.

**6.** The use according to any one of claims 1 to 3, characterized in that the ether is selected from the group comprising tetrahydrofuran, dioxan and mixtures thereof.

7. The use according to any one of claims 1 to 6, wherein the solvent is dimethylsulfoxide.

8. The use according to any one of claims 1 to 3, wherein the solvent is dimethylsulfoxide and the ether is methyl-tert-butylether.

9. The use according to any one of claims 1 to 8, wherein said stripper composition additionally includes a fluorinated surfactant.

10. The use according to any one of claims 1 to 3, in the stripping of glycerophthalic paints from a substrate consisting of wood, wherein the solvent is dimethylsulfoxide and the ether is selected from the group comprising diethyl-ether, methyl-tert-butylether, tert-amyl-methylether and mixtures thereof.

11. The use according to any one of claims 1 to 3, in the stripping of alkyde-urethane paints from a substrate consisting of wood, wherein the solvent is dimethylsulfoxide and the ether is selected from the group comprising diethylether, methyl-tert-butylether, tert-amyl-methylether and mixtures thereof.

12. The use according to any one of claims 1 to 3, in the stripping of alkyde-urethane paints from a substrate consisting of wood, wherein the ether is tetrahydrofuran and the solvent is selected from the group comprising dimethylsulfoxide, dimethylformamide, N-methyl-pyrrolidone, N-methyl-morpholine, $\gamma$-butyrolactone, acrylonitrile and mixtures thereof.

13. The use according to any one of claims 1 to 3, in the stripping of acrylic-polyurethane paints from a substrate consisting of a metal, wherein the solvent is dimethylsulfoxide and the ether is selected from the group comprising tetrahydrofuran, dioxan and mixtures thereof.

14. The use according to any one of claims 1 to 3, in the stripping of acrylic-polyurethane paints from a substrate consisting of metal, wherein the ether is tetrahydrofuran and the solvent is selected from the group comprising dimethylsulfoxide, dimethylformamide, N-methyl-pyrrolidone, N-methyl-morpholine, $\gamma$-butyrolactone, acrylonitrile and mixtures thereof.

15. The use according to any one of claims 1 to 3, in the stripping of epoxy paints form a substrate consisting of a metal, wherein the solvent is dimethylsulfoxide and the ether is selected from the group comprising diethylether, methyl-tert-butylether, tert-amyl-methylether and mixtures thereof.

16. The use according to any one of claims 1 to 15, in the building industry.

## Patentansprüche

1. Verwendung einer Zusammensetzung zum Abbeizen enthaltend:
   a) 1 bis 20 Vol.-% eines polaren aprotischen Lösungsmittels, ausgewählt aus der Gruppe bestehend aus: Dimethylsulfoxid, Dimethylformamid, N-Methylpyrrolidon, N-Methylmorpholin, $\gamma$-Butyrolacton, Acetonitril und deren Mischungen; und
   b) 99 bis 80 Vol-% eines Ethers, ausgewählt aus der Gruppe bestehend aus Diethylether, Methyl-tert.-butylether, tert.-Amylmethylether, Tetrahydrofuran, Dioxan und deren Mischungen.

2. Verwendung nach Anspruch 1, dadurch gekennzeichnet, daß das polare Lösungsmittel und der Ether in der Zusammensetzung jeweils in Mengen von 5 bis 15 Vol.-% und 95 bis 85 Vol.-% enthalten sind.

3. Verwendung nach Anspruch 1 oder 2, dadurch gekennzeichnet, daß das polare Lösungsmittel und der Ether in der Zusammensetzung in einem Volumenverhältnis von etwa 10/90 enthalten sind.

4. Verwendung nach einem der Ansprüche 1 bis 3, dadurch gekennzeichnet, daß der Ether ausgewählt wird aus der Gruppe bestehend aus Methyl-tert.-butylether, Diethylether, tert.-Amylmethylether und deren Mischungen.

5. Verwendung nach einem der Ansprüche 1 bis 4, dadurch gekennzeichnet, daß der Ether Methyl-tert.-butylether ist.

6. Verwendung nach einem der Ansprüche 1 bis 3, dadurch gekennzeichnet, daß der Ether ausgewählt wird aus der Gruppe bestehend aus Tetrahydrofuran, Dioxan und deren Mischungen.

7. Verwendung nach einem der Ansprüche 1 bis 6, dadurch gekennzeichnet, daß das Lösungsmittel Dimethylsulfoxid ist.

8. Verwendung nach einem der Ansprüche 1 bis 3, dadurch gekennzeichnet, daß das Lösungsmittel Dimethylsulfoxid und der Ether Methyl-tert.-butylether ist.

9. Verwendung nach einem der Ansprüche 1 bis 8, dadurch gekennzeichnet, daß die Zusammensetzung ferner ein fluoriertes oberflächenaktives Mittel enthält.

10. Verwendung nach einem der Ansprüche 1 bis 3 zum Abbeizen von Anstrichen auf Basis von Glycerinphthalaten auf einem Holzsubstrat, wobei das polare aprotische Lösungsmittel Dimethylsulfoxid ist und der Ether ausgewählt ist aus der Gruppe bestehend aus Diethylether, Methyl-tert.-butylether, tert.-Amylmethylether und deren Mischungen.

11. Verwendung nach einem der Ansprüche 1 bis 3 zum Abbeizen von Anstrichen auf Basis von Alkyd/Urethanharzen auf einem Holzsubstrat, wobei das Lösungsmittel Dimethylsulfoxid ist und der Ether ausgewählt ist aus der Gruppe bestehend aus Diethylether, Methyl-tert.-butylether, tert.-Amylmethylether und deren Mischungen.

12. Verwendung nach einem der Ansprüche 1 bis 3 zum Abbeizen von Anstrichen auf Basis von Alkyd/Urethanharzen auf einem Holzsubstrat, wobei der Ether Tetrahydrofuran ist und das Lösungsmittel ausgewählt ist aus der Gruppe bestehend aus Dimethylsulfoxid, Dimethylformamid, N-Methylpyrrolidon, N-Methylmorpholin, $\gamma$-Butyrolacton, Acetonitril und deren Mischungen.

13. Verwendung nach einem der Ansprüche 1 bis 3 zum Abbeizen von Anstrichen auf Basis von Acrylat/Polyurethanharzen auf einem Metallsubstrat, wobei das Lösungsmittel Dimethylsulfoxid ist und der Ether ausgewählt ist aus der Gruppe bestehend aus Tetrahydrofuran, Dioxan und deren Mischungen.

14. Verwendung nach einem der Ansprüche 1 bis 3 zum Abbeizen von Anstrichen auf Basis von Acrylat/Polyurethanharzen auf einem Metallsubstrat, wobei der Ether Tetrahydrofuran ist und das Lösungsmittel ausgewählt ist aus der Gruppe bestehend aus Dimethylformamid, N-Methylpyrrolidon, N-Methylmorpholin, $\gamma$-Butyrolacton, Acetonitril und deren Mischungen.

15. Verwendung nach einem der Ansprüche 1 bis 3 zum Abbeizen von Anstrichen auf Basis von Epoxyharzen auf einem Metallsubstrat, wobei das Lösungsmittel Dimethylsulfoxid ist und der Ether ausgewählt ist aus der Gruppe bestehend aus Diethylether, Methyl-tert.-butylether, tert.-Amylmethylether und deren Mischungen.

16. Verwendung nach einem der Ansprüche 1 bis 15 für die Bauindustrie.